# EUROPEAN PATENT SPECIFICATION

(11) **EP 4 053 381 B1**
(45) Date of publication and mention of the grant of the patent: **20.11.2024**
(21) Application number: 21425007.8
(22) Date of filing: 01.03.2021
(51) Int. Cl.: F01D 11/00, F01D 25/06

(54) **RING SEGMENT DEVICE FOR TURBINE VANES OF A POWER PLANT AND CORRESPONDING GAS TURBINE ASSEMBLY FOR POWER PLANT**
RINGSEGMENTVORRICHTUNG FÜR TURBINENLEITSCHAUFELN EINES KRAFTWERKS UND ENTSPRECHENDE GASTURBINENANLAGE FÜR KRAFTWERK
DISPOSITIF DE SEGMENT ANNULAIRE POUR AUBES DE TURBINE D'UNE CENTRALE ÉLECTRIQUE ET ENSEMBLE TURBINE À GAZ CORRESPONDANT POUR CENTRALE ÉLECTRIQUE

(43) Date of publication of application: 07.09.2022
(73) Proprietor: ANSALDO ENERGIA S.p.A., 16152 Genova (IT)
(72) Inventor: Gardella, Gabriele, 16152 Genova (IT)
(74) Representative: Studio Torta S.p.A.

(56) References cited:
- EP-A1- 3 054 169
- FR-A1- 3 056 636
- JP-A- 2004 011 434
- JP-A- 2010 151 044
- US-A1- 2016 208 630

## Description

### Field of the Invention

The technical field of the present invention relates to the turbomachine assemblies for power plants, i.e. a power plant comprising at least a turbine assembly. More in detail, the present invention refers to the technical field of the gas turbine assemblies for power plants. In this technical field, the present invention refers to the technical problem of how to improve the so called "stator ring" (also known as "sealing ring"). This stator ring is a ring structure formed by a plurality of ring segments centered in the turbine axis and configured for connecting as a ring the inner free ends of the turbine vanes in order to increase the performance, efficiency and lifetime of the system.

### Description of prior art

As known, a gas turbine assembly for power plants comprises a compressor assembly, a combustor assembly and a turbine assembly. The compressor assembly is configured for compressing incoming air supplied at a compressor inlet. The compressed air leaving the compressor assembly flows into a closed volume (called "plenum") and from there into the combustor assembly. This combustor assembly comprises usually a plurality of burners configured for injecting fuel (at least one type of fuel) into the compressed air flow. The mixture of fuel and compressed air enters a combustion chamber where this mixture ignites. The resulting hot gas flow leaves the combustion chamber and flows by the turbine assembly performing a rotating work on a rotor connected to a generator. Usually the same rotor supports also the compressor assembly and it defines the main axis of the system. As known, the turbine assembly comprises a plurality of stages, or rows, of rotating blades that are interposed by a plurality of stages, or rows, of stator vanes. The rotating blades are supported by the rotor whereas the stator vanes are supported by a casing (called "vane carrier") that is concentric and surrounding the turbine assembly.

In order to achieve a high efficiency, the hot gas flow has to have a very high turbine inlet temperature. However, in general this high temperature involves an undesired high NOx emission level. In order to reduce this emission and to increase operational flexibility without decreasing the efficiency, a so called "sequential" gas turbine is particularly suitable. In general, a sequential gas turbine performs two combustion stages in series. Today at least two different kinds of sequential gas turbines are known. According to a first embodiment, the gas turbine comprises a first combustor and the second combustor that are annular shaped and are physically separated by a turbine, called high pressure turbine. Downstream the second combustor a second turbine unit is present (called low pressure turbine) .

According to a second embodiment of a sequential gas turbine, the gas turbine is not provided with the high-pressure turbine and the combustor assembly is realized in form of a plurality of can-combustors wherein each can-combustor comprises a first combustor and a second combustor arranged directly one downstream the other inside a common casing can-shaped. These two examples of gas turbine assemblies have been cited only as non-limiting examples wherein the stator ring of the present invention can be applied.

In the following specification, the terms "circumferential, radial, axial, outer and inner" will refer to the rotor or turbine axis (that is parallel to the main air/hot gas flow). The terms "downstream and upstream" will refer to the main direction of the air/hot gas flow. As foregoing reported, and as known, the turbine assembly comprises a plurality of stages, or rows, of stator vanes wherein in each row is defined by a plurality of vanes arranged adjacent to each other along the circumferential direction. Each vane comprises a body substantially radially shaped extending between an outer end supported by the outer casing and an inner free end facing (and in proximity to) the rotor. In this configuration, each vane (in particular the corresponding free end) may vibrate or oscillate during the use of the system. In order to reduce or limit these undue movements, it is known to provide each vane row with a so called "stator ring" that is an assembly ring-shaped configured for connecting to each other the free ends of a vane row. EP2984295, that can be considered as the closest prior art document for the present invention, discloses an example of a stator ring formed by a plurality of ring segments circumferentially coupled to each other. Due to the vane vibration and the different thermal expansions between the vane and the corresponding stator ring segment, the coupling between the vane and the ring segment may wear out and consequently this coupling may become not stable. In order to avoid this problem, the solution disclosed in EP2984295 is to provide the ring segment with a plurality of so called "pressure bolts". Each pressure bolt is a pushing device configured for being housed in a ring segment and for acting against the vane by means of a restoring force generated by a compressed spring supported by the bolt itself. In this way the vibrations of the vane and the different thermal expansions between vane and corresponding ring segment are dumped avoiding coupling instability.

Starting from the above, the scope of the present invention is to improve the disclosure of EP2984295, i.e. to provide an improved stator ring segment comprising a plurality of the pressure bolts or damping pins.

Prior art documents EP3054169 and US2016208630 disclose ring segments configured for being coupled to the free ends of the turbine vanes by radial damping coupling devices.

### Disclosure of the invention

Accordingly, a primary scope of the present invention is to provide a new and inventive ring segment device for turbine vanes, i.e. a device configured for being coupled to one or more free ends of vanes and for realizing, cooperating with adjacent segments, a stator ring structure around the axis of the turbine in proximity of the rotor. In general, the starting point of the present invention is to provide a ring segment device comprising:
- a ring segment, as main body, having an first face, or outer face, configured for being coupled to the free end, usually shaped as a platform, of one turbine vane or two or more adjacent turbine vanes;
- at least a damping pin device, preferably in form of a damping pin or pressure bolt according EP2984295, housed in corresponding holes obtained in the ring segment and configured for acting (preferably pushing) against the corresponding turbine vane/s in a sprung manner for dumping vibration or thermal deformations.

In this known configuration, according to the main aspect of the invention the ring segment device moreover comprises:
- a bar, or circumferential bar, arranged as an intermediate body between the pushing head of the damping pin devices and the platform turbine vane/s.

Advantageously, in this way the pushing force generated by the damping pin devices against the turbine vanes is not locally concentrated (as in EP2984295) but distributed along the bar. Thus, any local wear of the vane platform at the damping pin devices is avoided and the coupling stability improved.

In each ring segment device the bar and the ring segment have substantially the same circumferential extent so that for each segment a single bar is present acting to one or more vanes.

For each vane is provided a damping pin device and each hole housing the corresponding damping pin device has an axis configured so that, in use, each damping pin device is axially arranged in order to better damp the axial vibrations of the free ends of the vanes.

Preferably, each hole housing the corresponding damping pin device is a passing hole comprising a first end obtained in an upstream face of the ring segment and a second end housing a portion of the bar. Consequently, each damping pin device comprises a cylindrical base configured for being coupled (preferably by a screwing coupling) to the first end of the corresponding hole and a head acting in a sprung manner against the bar.

Each damping pin device moreover comprises:
- a piston integral or coupled to the base and having a smaller diameter;
- a spring device (preferably in form of a plurality of disc springs separated by fixed partitions) supported around the piston between the base end and a head in contact to the bar; the piston can slide with respect to the head so that by screwing the base in the hole the piston is moved toward the head and the spring device is progressively compressed increasing the pushing force.

The sliding coupling between the piston and the head is performed, for instance, by a pin fixed to head protruding inside a slotted hole obtained in the piston.

Preferably, a safety lock device is provided for each damping pin device configured for acting against the base of the corresponding damping pin device. For instance, the safety lock device may comprise a pin housed in an inclined hole obtained in the upstream face of the ring segment and acting against a V shaped circumferential slot obtained in the base of the damping pin device.

Even if the first coupling (i.e. before the activation of the damping pins) between the ring segment and the vane platforms is guarantee by corresponding hook portions obtained in these elements, preferably a mounting device is provided configured for coupling the ring segment to a turbine vane before the activation of the damping pin devices. This mounting device may comprise a radial pin housed in a hole obtained in the inner face of the ring segment and having a protruding free end configured for entering a seat obtaining in the turbine vane. This mounting device moreover comprises a screw for fixing in position the radial pin that is accessible by the upstream face of the segment (as the inclined safety lock device and the axial damping pin devices).

As foregoing cited, the ring segment device of the present invention can be preferably used in a gas turbine assembly for power plant. In general, a gas turbine assembly is an assembly having an axis and comprising:
- a compressor sector for compressing ambient air,
- a combustor sector for mixing and combusting the compressed with at least a fuel
- at least a turbine sector for expanding the combusted hot gas flow leaving the combustors and performing work on a rotor.

In general, a plurality of ring segment devices of the present invention may be used for forming a stator ring connecting the free ends of a row or stage of turbine vanes.

The combustor sector may comprise a plurality of can combustors, wherein each can combustor houses in series a first and a second burner. Alternatively, the gas turbine assembly may comprise in series a first burner, a high pressure turbine, a second burner and a low pressure turbine.

It is to be understood that both the foregoing general description and the following detailed description are exemplary and are intended to provide further explanation of the invention as claimed. Other advantages and features of the invention will be apparent from the following description, drawings and claims.

The features of the invention believed to be novel are set forth with particularity in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figures 1-3 are a schematic views of a gas turbine assembly and two more detailed embodiments of different kinds of gas turbine assemblies;
- figure 4 is a front view of a plurality of ring segment devices of the present invention forming a stator ring connecting the free ends of a row or stage of vanes;
- figure 5 is an enlarged view of a portion of figure 4 disclosing a portion of a ring segment device according to the present invention;
- figures 6 and 7 disclose a damping pin device used in the ring segment device of figure 5;
- figures 8 and 9 disclose two different configurations of the damping pin device of figures 6 and 7 during the activation in a ring segment;
- figures 10 and 11 disclose two additional devices of the ring segment device of figure 5.

### Detailed description of preferred embodiments of the invention

In cooperation with the attached drawings, the technical contents and detailed description of the present invention are described thereinafter according to preferred embodiments, being not used to limit its executing scope. Any equivalent variation and modification made according to appended claims is all covered by the claims claimed by the present invention.

Reference will now be made to the drawing figures to describe the present invention in detail.

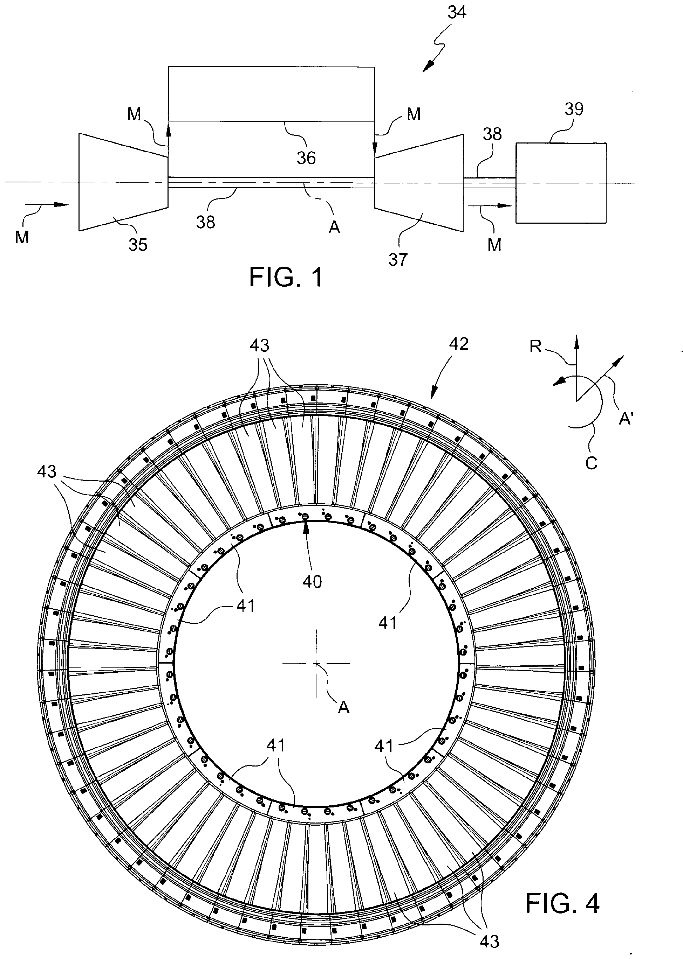

Reference is now made to Fig. 1 that is a schematic view of a gas turbine assembly wherein the reference M refers to the main air/hot gas flow directions. As known, this gas turbine assembly 34 for power plants comprises a compressor assembly 35, a combustor assembly 36 and a turbine assembly 37. The compressor assembly is configured for compressing incoming air supplied at a compressor inlet. The compressed air leaving the compressor assembly 35 flows into the combustor assembly 36. This combustor assembly 36 comprises usually a plurality of burners configured for injecting fuel (at least one type of fuel) into the compressed air flow. The mixture of fuel and compressed air enters a combustion chamber where this mixture ignites. The resulting hot gas flow leaves the combustor assembly 36 and enters the turbine assembly 37 performing a rotating work on a rotor 38 having an axis A and connected to a generator 39.

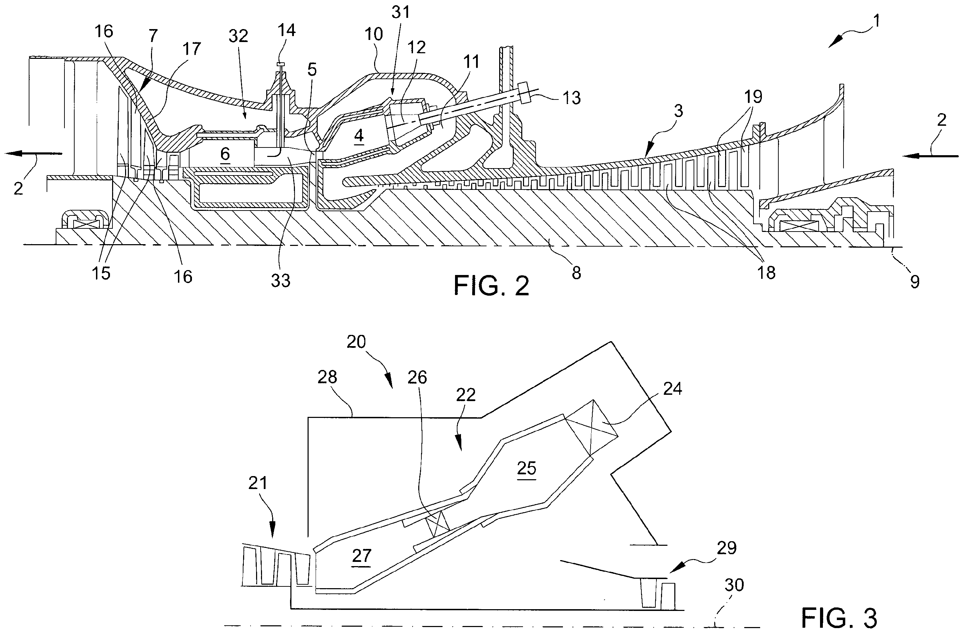

Figure 2 discloses a first non-limiting detailed example of a gas turbine assembly for power plant 1 that can be provided with a plurality of new ring segment devices according to the present invention. According to the embodiment of figure 2 this gas turbine is a so called "sequential-combustion gas turbine" provided with a high-pressure and a low-pressure turbine. Following the main gas flow 2, the gas turbine 1 of figure 2 comprises a compressor 3, a first combustor 31, a high-pressure turbine 5, a second combustor 32 and a low-pressure turbine 7. The compressor 3 and the two turbines 5, 7 are integral of or are connected to a common rotor 8 rotating about an axis 9 and surrounded by a concentric casing 10. The compressor 3 is supplied with air and has rotating blades 18 and stator vanes 19 configured to compress the air entering the compressor 3. Exiting the compressor, the compressed air flows into a plenum 11 and from there into a plurality of first burners 12 of the first combustor 31 arranged in a circular pattern around the axis 9. Each first burner 12 is configured for injecting at least one type of fuel (connected to at least one first fuel supply 13) into the compressed airflow. Preferably, this first burner 12 may be defined as a "premix" burner because is configured for mixing the compressed air and the injected fuel before the ignition. The fuel/compressed air mixture flows into a first combustion chamber 4 annularly shaped, where this mixture ignites. During start-up this mixture is initially ignited by an ignitor, for instance by a spark igniter; once ignited the ignition is self-sustaining and the ignitor is turned off. The resulting hot gas leaves the first combustor chamber 4 and is partially expanded in the high-pressure turbine 5 performing work on the rotor 8. Downstream of the high-pressure turbine 5 the partially-expanded hot gas flows into a row of second burners 33 where at least one type of fuel is injected by fuel lances 14 (each burner has one lance). The partially-expanded gas has a high temperature and contains sufficient oxygen for further combustion that occurs by self-ignition in the second combustion chamber 6 arranged downstream of the row second burners 33. These second burners 33 are also called "reheat" burners. The reheated hot gas leaves the second combustion chamber 6 and flows in the low-pressure turbine 7 where it is expanded performing work on the rotor 8. The low-pressure turbine 7 comprises numerous stages: rows of rotor blades 15 arranged in series in the main flow direction. Such rows of blades 15 are interposed by rows of stator vanes 16. The rotor blades 15 are connected to the rotor 8 whereas the stator vanes 16 are connected to a vane carrier 17 that is a concentric casing surrounding the low-pressure turbine 7.

Reference is now made to Fig. 3 that is a schematic view of a second not-limiting example of a gas turbine that can be provided with a plurality of ring segment device according to the present invention. Also this gas turbine 20 is a "sequential-combustion gas turbine" that can be provided with the innovative features according to the present invention. In particular, figure 3 discloses a partial view of a gas turbine 20 with a compressor 29, a turbine 21 and a sequential combustor 22. The sequential combustor 22 of figure 3 comprises a plurality of so-called can combustors, i.e. a plurality bolt-on can structures wherein each can combustor is provided with first burners 24, a first combustion chamber 25, second burners 26 and a second combustion chamber 27. Upstream of the second burner 26 an mixer may be provided for adding air into the hot gas leaving the first combustion chamber 25 and creating turbulence in the air/hot gas mixture. When the hot gas leaves the second combustion chamber 27 it then expands in the turbine 21 performing work on a rotor 30.

The more detailed examples of turbine assemblies disclosed in figure 2 and 3 have been described only as non-limiting examples of turbomachine that can be provided with a plurality of ring segment devices of the present invention. Indeed the present invention can be applied in general in every kind of turbine assembly where at least a row or stage of vane is present. In view of this generalization figure 4 discloses a front view (i.e. a view along the hot gas flow direction) of a plurality of ring segment devices of the present invention forming a stator ring connecting the free ends of a row or stage of vanes. In this figure the reference A' refers to the axial direction (i.e. parallel to the axis A of the rotor), the reference R the radial direction and the reference C the circumferential direction. Thus, figure 4 discloses a stator ring 40 formed by a plurality of ring segment devices 41 adjacent to each other along the circumferential direction C connecting as a single ring the free inner ends of a row of vanes. The reference 42 refer to the row in general and the reference 43 to each single vane.

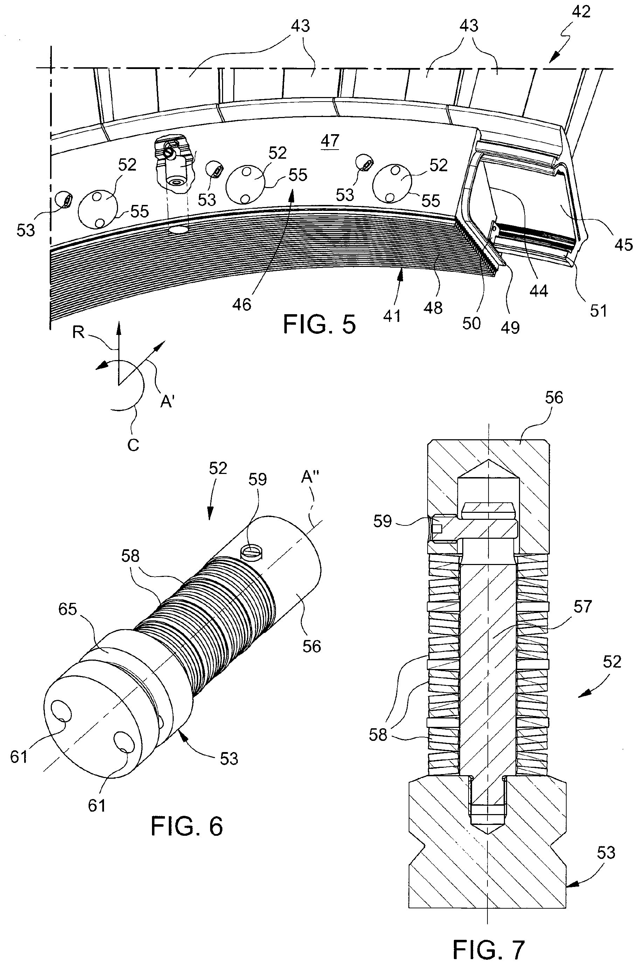

Figure 5 is an enlarged view of a portion of figure 4 disclosing a portion of a single ring segment device 41 according to the present invention. As disclosed, the single ring segment device 41 comprises a ring segment 46 as main body provided with an outer face 44 configured, i.e. shaped, for being coupled to the inner face of one or more vane platforms 45. The shape of each platform 45 and the corresponding shape of the outer face 44 of the ring segment 46 may vary; in this example the coupling is performed by hook portions of the vanes (upstream oriented) housed in corresponding seats obtained in the ring segment 46. This ring segment 46 moreover comprises an upstream face 47 (substantially radial) and an inner face 48 (substantially axial) facing the rotor. Each ring segment 46 comprises a lateral lip 49 configured to be housed in a corresponding lateral seat of the adjacent ring segment 46 for forming a single circumferential ring. The reference 50 refer to a second body of the ring segment device 41 of the present invention, i.e. a circumferential bar that act as an intermediate body between the ring segment 41 and the platform 45. In this example, the bar 50 is single bar having a circumferential extent substantially equal to the corresponding segment 46 and it is downstream arranged, i.e. it acts against the downstream hook 51 of the platform 45. References 52 and 53 reported in figure 5 refer to components of the ring device 41 that will be described in detail in the following figures, namely damping pins 52, locking devices 53 and mounting device.

In particular, figures 6 and 7 disclose a damping pin 52 isolated from the segment 46. As known, the scope of this damping pin is to improve the coupling between vane/s and ring segment by damping coupling vibrations and different thermal deformations. According to this example, the damping pin device 52 has an axis A" (in use parallel to the axial direction A) and it is configured for being housed in a corresponding axial hole 55 obtained in the upstream face 47. Consequently, each damping pin device 52 comprises a cylindrical base 53 configured for being coupled (preferably by a screwing coupling) to the first end 54 of the corresponding hole 55.

Each damping pin device 52 moreover comprises:
- a piston 57 integral or coupled to the base 53 but having a smaller diameter;
- a head 56 acting in a sprung manner against the bar 50 and coupled to the piston 57 in a sliding manner;
- a spring device (preferably in form of a plurality of disc springs 58) between the base end and the head.

In this configuration, by screwing the base 53 in the first end 54 of the corresponding hole 55 the piston 57 is moved toward the bar 50 and the spring device 58 is progressively compressed toward the head 56 (fixed against the bar) increasing the pushing force.

The sliding coupling between the piston 57 and the head 56 is performed, for instance, by a pin 59 integral with respect to head 56 and protruding inside a slotted hole obtained in the piston 57. The reference 61 in figure 6 refer to holes configured for housing the ends of a fork tool for screwing the damping pin 52 in the corresponding hole 55.

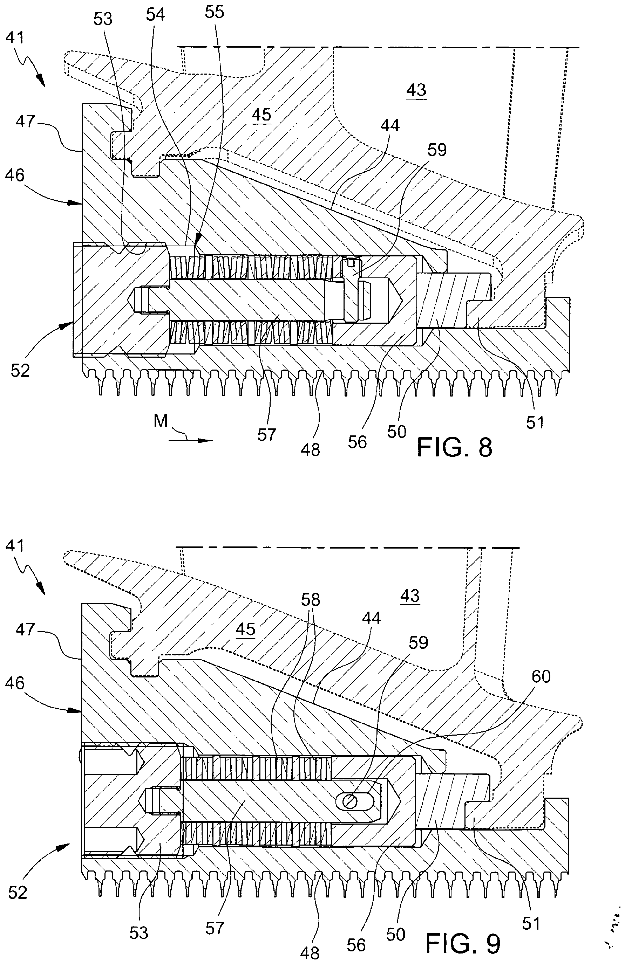

Figures 8 and 9 disclose two different configurations of the damping pin 52 in a ring segment device 41. In particular figure 8 discloses a first step of the activation procedure wherein the base 53 is only in part screwed in the first end 54 of the hole 55 and, therefore, the spring device 58 is not fully compressed. Figure 9 discloses the configuration of the segment ring device 52 when the base 53 is fully screwed in the first end 54 of the hole 55 and the spring 58 is thus compressed for generating via the head 56 the required sprung force against the bar 50.

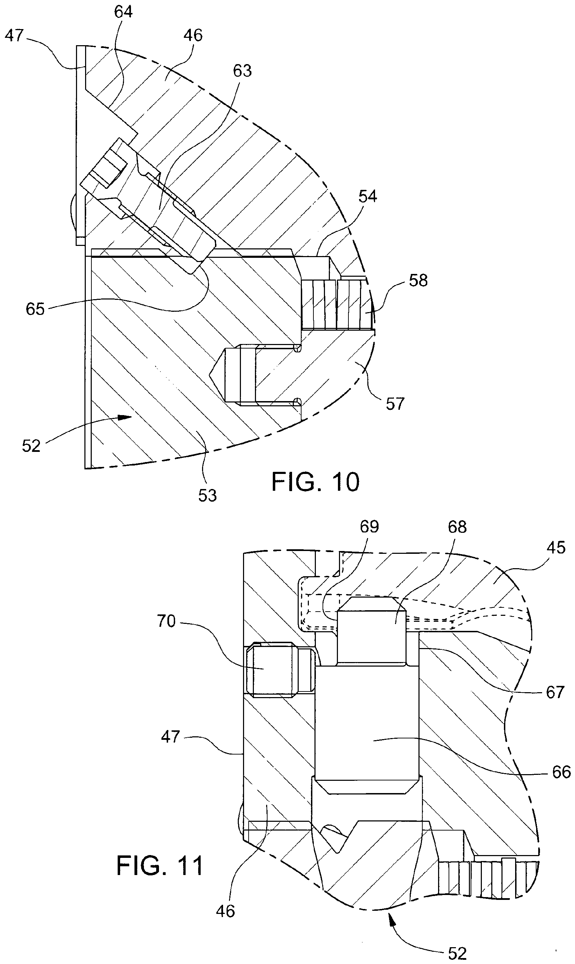

Figures 10 and 11 disclose two additional devices of the ring segment device 52 of the present invention. In particular, figure 10 discloses a safety lock device that is provided for locking in position a corresponding damping pin device 52. In the disclosed example of figure 10, the safety lock device comprises a pin 63 housed in an inclined hole 64 obtained in the ring segment 46 and acting against a V shaped circumferential slot 65 of the base 53 of the damping pin device 52. Figure 11 discloses a mounting device configured for coupling the ring segment 46 to a turbine vane platform 45 before the activation of the damping pin devices 52. According to this example, the mounting device comprises a radial pin 66 housed in a radial hole 67 of the ring segment 46 and having a protruding free 68 configured for enter a seat 69 obtaining in a turbine vane platform 45. The mounting device moreover comprising an axial screw 70 for fixing in position the radial pin 69.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A ring segment device for turbine vanes of a power plant turbine assembly having an axis (A), preferably a gas turbine assembly; the ring segment device (41) comprising:
- a ring segment (46) having a first face (44) configured for being coupled to a free end (45) of at least two adjacent turbine vanes (43);
- at least a damping pin device (52) housed in a corresponding hole (55) obtained in the ring segment (46); the damping pin device (52) being configured for coupling the ring segment (46) to the corresponding turbine vane/s (43) in a sprung manner; **characterized in that**
the ring segment device (41) moreover comprises:
- a circumferential bar (50) having substantially the same circumferential extent of the ring segment (46) arranged between the damping pin device (52) and the turbine vane/s (43) so that the force generated by the damping pin device (52) against the turbine vane/s (43) is not locally concentrated but distributed along the bar (50);
wherein each hole (55) has an axis configured so that, during the use of the ring segment device (41), the damping pin device (52) is axially arranged with respect to the axis (A) of the power plant turbine assembly.

2. The ring segment device as claimed in claim 1, wherein each hole (55) is a passing hole comprising a first end (54) configured for being coupled to a base (53) of the corresponding damping pin device (41) and a second end housing a portion of the bar (50) acting against a head (56) of the damping pin device (41).

3. The ring segment device as claimed in claim 2, wherein the coupling between the base (53) of the damping pin device (52) and the first end (54) of the corresponding hole (55) is a screwed coupling.

4. The ring segment device as claimed in claim 2 or 3, wherein the damping pin device (52) moreover comprises:
- a piston (57) integral or coupled to the base (53) and having a smaller diameter than the base (53);
- the head (56) opposite to the base (53) being coupled to the piston (57) in a sliding manner;
- a spring device (58) supported by the piston (57) between the base (53) and the head (56) so that by screwing the damping pin device (52) in the corresponding hole (55) the spring device (58) is progressively compressed and the force generated by the head (56) against the bar (50) is progressively increased.

5. The ring segment device as claimed in claim 4, wherein the piston (57) comprises a slotted hole housing a pin (59) fixed to head (56).

6. The ring segment device as claimed in any one of the foregoing claims from 1 to 5, wherein a safety lock device is provided for each damping pin device (52) configured for acting against the base (53) of the corresponding damping pin device (52).

7. The ring segment device as claimed in claim 6, wherein the safety lock device comprises a pin (63) housed in an inclined hole (64) obtained in the ring segment (46) and acting against a V shaped circumferential slot (65) of the base (53) of the damping pin device (52).

8. The ring segment device as claimed in any one of the foregoing claims, wherein a mounting device is provided configured for coupling the ring segment (46) to a turbine vane (43) before the activation of the damping pin device (52) .

9. The ring segment device as claimed in claim 8, wherein the mounting device comprises a radial pin (68) housed in a hole (67) of the ring segment (46) and having a free end protruding outside the ring segment (46) configured to enter a seat obtained in a turbine vane (43); the mounting device moreover comprising a screw (70) for fixing in position the radial pin (68).

10. The ring segment device as claimed in claim 9, wherein the screw (70) for fixing in position the radial pin (68), the base (53) of the damping pin device (52) and a/the safety lock device are accessible by a common upstream face (47) of the ring segment (46) .

11. Gas turbine assembly for power plant, the gas turbine assembly having an axis (A) and comprising following the gas flow direction:
- a compressor sector (35) for compressing ambient air,
- a combustor sector (36) for mixing and combusting the compressed with at least a fuel
- at least a turbine sector (37) for expanding the combusted hot gas flow leaving the combustors (36) and performing work on a rotor (38);
wherein the turbine sector comprises at a row (42) of stator vanes (43) each having an outer end coupled to a casing and an inner end (45) facing the rotor (38),
wherein the gas turbine assembly comprises a plurality of ring segment devices (41) as claimed in any one of the foregoing claims for connecting the inner ends (45) of each of the vanes (43) as a ring (40) .

12. Gas turbine as claimed in claim 11 wherein, the combustor sector (36) comprises a plurality of can combustors, each can combustor houses in series a first and a second burner.

13. Gas turbine as claimed in claim 11 wherein, the gas turbine assembly comprises in series a first burner, a high pressure turbine, a second burner and a low pressure turbine.

## Patentansprüche

1. Ringsegmentvorrichtung für Turbinenleitschaufeln einer Kraftwerksturbinenanordnung mit einer Achse (A), vorzugsweise einer Gasturbinenanordnung; wobei die Ringsegmentvorrichtung (41) umfasst:
- ein Ringsegment (46), das eine erste Seite (44) aufweist, die dazu ausgestaltet ist, an ein freies Ende (45) von mindestens zwei benachbarten Turbinenleitschaufeln (43) gekoppelt zu sein;
- mindestens eine Dämpfungsstiftvorrichtung (52), die in einem entsprechenden Loch (55) untergebracht ist, das in dem Ringsegment (46) erhalten wird; wobei die Dämpfungsstiftvorrichtung (52) dazu ausgestaltet ist, das Ringsegment (46) auf eine gefederte Weise an die entsprechende/n Turbinenleitschaufel/n zu koppeln;
**dadurch gekennzeichnet, dass** die Ringsegmentvorrichtung (41) ferner umfasst:
- eine umlaufende Stange (50), die im Wesentlichen das gleiche umlaufende Maß wie das Ringsegment (46) aufweist und derart zwischen der Dämpfungsstiftvorrichtung (52) und der/den Turbinenleitschaufel/n (43) angeordnet ist, dass die von der Dämpfungsstiftvorrichtung (52) gegen die Turbinenleitschaufel/n (43) erzeugte Kraft nicht lokal konzentriert, sondern entlang der Stange (50) verteilt wird;
wobei jedes Loch (55) eine Achse aufweist, die derart ausgestaltet ist, dass während der Verwendung der Ringsegmentvorrichtung (41) die Dämpfungsstiftvorrichtung (52) axial in Bezug auf die Achse (A) der Kraftwerksturbinenanordnung angeordnet ist.

2. Ringsegmentvorrichtung nach Anspruch 1, wobei jedes Loch (55) ein Durchgangsloch ist, das ein erstes Ende (54), das dazu ausgestaltet ist, an eine Basis (53) der entsprechenden Dämpfungsstiftvorrichtung (41) gekoppelt zu sein, und ein zweites Ende umfasst, das einen Abschnitt der Stange (50) unterbringt, der gegen einen Kopf (56) der Dämpfungsstiftanordnung (41) wirkt.

3. Ringsegmentvorrichtung nach Anspruch 2, wobei die Kopplung zwischen der Basis (53) der Dämpfungsstiftvorrichtung (52) und dem ersten Ende (54) des entsprechenden Lochs (55) eine Schraubkopplung ist.

4. Ringsegmentvorrichtung nach Anspruch 2 oder 3, wobei die Dämpfungsstiftvorrichtung (52) ferner umfasst:
- einen Kolben (57), der mit der Basis (53) einteilig oder daran gekoppelt ist und einen kleineren Durchmesser als die Basis (53) aufweist;
- den Kopf (56) entgegengesetzt zur Basis (53), der verschiebbar an den Kolben (57) gekoppelt ist;
- eine Federvorrichtung (58), die derart von dem Kolben (57) zwischen der Basis (53) und dem Kopf (56) gestützt wird, dass durch Schrauben der Dämpfungsstiftvorrichtung (52) in dem entsprechenden Loch (55) die Federvorrichtung (58) allmählich zusammengedrückt wird und die von dem Kopf (56) erzeugte Kraft gegen die Stange (50) allmählich erhöht wird.

5. Ringsegmentvorrichtung nach Anspruch 4, wobei der Kolben (57) ein Schlitzloch umfasst, das einen an dem Kopf (56) befestigten Stift (59) unterbringt.

6. Ringsegmentvorrichtung nach einem der vorhergehenden Ansprüche von 1 bis 5, wobei eine Sicherheitsverriegelungsvorrichtung für jede Dämpfungsstiftvorrichtung (52) bereitgestellt ist, die dazu ausgestaltet ist, gegen die Basis (53) der entsprechenden Dämpfungsstiftvorrichtung (52) zu wirken.

7. Ringsegmentvorrichtung nach Anspruch 6, wobei die Sicherheitsverriegelungsvorrichtung einen Stift (63) umfasst, der in einem geneigten Loch (64) untergebracht ist, das in dem Ringsegment (46) erhalten wird, und gegen einen V-förmigen umlaufenden Schlitz (65) der Basis (53) der Dämpfungsstiftvorrichtung (52) wirkt.

8. Ringsegmentvorrichtung nach einem der vorhergehenden Ansprüche, wobei eine Montagevorrichtung bereitgestellt ist, die dazu ausgestaltet ist, das Ringsegment (46) vor der Aktivierung der Dämpfungsstiftvorrichtung (52) an eine Turbinenleitschaufel (43) zu koppeln.

9. Ringsegmentvorrichtung nach Anspruch 8, wobei die Montagevorrichtung einen radialen Stift (68) umfasst, der in einem Loch (67) des Ringsegments (46) untergebracht ist und ein freies Ende aufweist, das außerhalb des Ringsegments (46) hervorsteht und dazu ausgestaltet ist, in einen Sitz einzutreten, der in einer Turbinenleitschaufel (43) erhalten wird;
wobei die Montagevorrichtung ferner eine Schraube (70) zum Befestigen des radialen Stifts (68) in seiner Position umfasst.

10. Ringsegmentvorrichtung nach Anspruch 9, wobei die Schraube (70) zum Befestigen des radialen Stifts (68) in seiner Position, die Basis (53) der Dämpfungsstiftvorrichtung (52) und eine/die Sicherheitsverriegelungsvorrichtung über eine gemeinsame vorgelagerte Seite (47) des Ringsegments (46) zugänglich sind.

11. Gasturbinenanordnung für Kraftwerk, wobei die Gasturbinenanordnung eine Achse (A) aufweist und der Gasströmungsrichtung folgend umfasst:
- einen Verdichtersektor (35) zum Verdichten von Umgebungsluft,
- einen Brennkammersektor (36) zum Mischen und Verbrennen der verdichteten Umgebungsluft mit mindestens einem Brennstoff,
- mindestens einen Turbinensektor (37) zum Expandieren der verbrannten Heißgasströmung, welche die Brennkammern (36) verlässt, und Durchführen von Arbeit auf einem Rotor (38);
wobei der Turbinensektor eine Reihe (42) von Statorleitschaufeln (43) umfasst, die jeweils ein äußeres Ende, das an ein Gehäuse gekoppelt ist, und ein inneres Ende (45) aufweisen, das dem Rotor (38) zugewandt ist,
wobei die Gasturbinenanordnung eine Vielzahl von Ringsegmentvorrichtungen (41) nach einem der vorhergehenden Ansprüche zum Verbinden der inneren Enden (45) von jeder der Leitschaufeln (43) als ein Ring (40) umfasst.

12. Gasturbine nach Anspruch 11, wobei der Brennkammersektor (36) eine Vielzahl von Rohrbrennkammern umfasst, wobei jede Rohrbrennkammer einen ersten und einen zweiten Brenner in Reihe unterbringt.

13. Gasturbine nach Anspruch 11, wobei die Gasturbinenanordnung in Reihe einen ersten Brenner, eine Hochdruckturbine, einen zweiten Brenner und eine Niederdruckturbine umfasst.

## Revendications

1. Dispositif de segment annulaire pour aubes de turbine d'un ensemble de centrale électrique ayant un axe (A), de préférence un ensemble turbine à gaz ; le dispositif de segment annulaire (41) comprenant :
- un segment annulaire (46) ayant une première face (44) configurée pour être couplée à une extrémité libre (45) d'au moins deux aubes de turbine adjacentes (43) ;
- au moins un dispositif de tige d'amortissement (52) contenu dans un orifice correspondant (55) obtenu dans le segment annulaire (46) ; le dispositif de tige d'amortissement (52) étant configuré pour coupler le segment annulaire (46) aux aubes de turbine correspondantes (43) à l'aide d'un ressort ;
**caractérisé en ce que**
le dispositif de segment annulaire (41) comprend en outre :
- une barre circonférentielle (50) ayant sensiblement la même étendue circonférentielle que le segment annulaire (46) prévue entre le dispositif de tige d'amortissement (52) et les aubes de turbine (43) de sorte que la force générée par le dispositif de tige d'amortissement (52) contre les aubes de turbine (43) ne soit pas localement concentrée mais répartie le long de la barre (50) ;
dans lequel chaque orifice (55) possède un axe configuré de sorte que, pendant l'utilisation du dispositif de segment annulaire (41), le dispositif de tige d'amortissement (52) soit axialement prévu par rapport à l'axe (A) de l'ensemble turbine de centrale électrique.

2. Dispositif de segment annulaire selon la revendication 1, dans lequel chaque orifice (55) est un orifice traversant comprenant une première extrémité (54) configurée pour être couplée à une base (53) du dispositif de tige d'amortissement correspondant (41) et une deuxième extrémité contenant une partie de la barre (50) qui agit contre une tête (56) du dispositif de tige d'amortissement (41).

3. Dispositif de segment annulaire selon la revendication 2, dans lequel le couplage entre la base (53) du dispositif de tige d'amortissement (52) et la première extrémité (54) de l'orifice correspondant (55) est un couplage vissé.

4. Dispositif de segment annulaire selon la revendication 2 ou 3, dans lequel le dispositif de tige d'amortissement (52) comprend en outre :
- un piston (57) qui fait partie intégrante de ou couplé à la base (53) et ayant un diamètre inférieur à celui de la base (53) ;
- la tête (56) opposée à la base (53) couplée au piston (57) de manière coulissante ;
- un dispositif de ressort (58) supporté par le piston (57) entre la base (53) et la tête (56) de sorte que, en vissant le dispositif de tige d'amortissement (52) dans l'orifice correspondant (55), le dispositif de ressort (58) soit progressivement comprimé et la force générée par la tête (56) contre la barre (50) soit progressivement augmentée.

5. Dispositif de segment annulaire selon la revendication 4, dans lequel le piston (57) comprend un orifice à fente qui contient une tige (59) fixée sur la tête (56).

6. Dispositif de segment annulaire selon l'une quelconque des revendications précédentes 1 à 5, dans lequel un dispositif de verrou de sécurité est prévu pour chaque dispositif de tige d'amortissement (52) configuré pour agir contre la base (53) du dispositif de tige d'amortissement correspondant (52).

7. Dispositif de segment annulaire selon la revendication 6, dans lequel le dispositif de verrou de sécurité comprend une tige (63) contenue dans un orifice incliné (64) obtenu dans le segment annulaire (46) et qui agit contre une fente circonférentielle en forme de V (65) de la base (53) du dispositif de tige d'amortissement (52).

8. Dispositif de segment annulaire selon l'une quelconque des revendications précédentes, dans lequel un dispositif de montage est prévu et est configuré pour coupler le segment annulaire (46) à une aube de turbine (43) avant l'activation du dispositif de tige d'amortissement (52).

9. Dispositif de segment annulaire selon la revendication 8, dans lequel le dispositif de montage comprend une tige radiale (68) contenue dans un orifice (67) du segment annulaire (46) et ayant une extrémité libre qui fait saillie à l'extérieur du segment annulaire (46) configuré pour pénétrer dans un siège obtenu dans une aube de turbine (43) ;
le dispositif de montage comprenant en outre une vis (70) destinée à fixer en position la tige radiale (68).

10. Dispositif de segment annulaire selon la revendication 9, dans lequel la vis (70) destinée à fixer en position la tige radiale (68), la base (53) du dispositif de tige d'amortissement (52) et le dispositif de verrou de sécurité sont accessibles par une face amont commune (47) du segment annulaire (46).

11. Ensemble turbine à gaz pour centrale électrique, l'ensemble turbine à gaz ayant un axe (A) et comprenant, en suivant le sens d'écoulement du gaz :
- un secteur de compresseur (35) destiné à comprimer l'air ambiant,
- un secteur de chambre de combustion (36) destiné à mélanger et brûler l'air comprimé avec au moins un combustible,
- au moins un secteur de turbine (37) destiné à dilater le flux de gaz chaud comprimé qui quitte les chambres de combustion (36) et à effectuer des opérations sur un rotor (38) ;
dans lequel le secteur de turbine comprend une rangée (42) d'aubes de stator (43) ayant chacune une extrémité externe couplée à un carter et une extrémité interne (45) qui fait face au rotor (38),
dans lequel l'ensemble turbine à gaz comprend une pluralité de dispositifs de segments annulaires (41) selon l'une quelconque des revendications précédentes destinés à relier les extrémités internes (45) de chacune des aubes (43) sous la forme d'un anneau (40).

12. Turbine à gaz selon la revendication 11, dans laquelle le secteur de chambre de combustion (36) comprend une pluralité de chambres de combustion annulaires, chaque chambre de combustion annulaire contenant en série un premier et un deuxième brûleur.

13. Turbine à gaz selon la revendication 11, dans laquelle l'ensemble turbine à gaz comprend en série un premier brûleur, une turbine à haute pression, un deuxième brûleur et une turbine à basse pression.
